(19) Europäisches Patentamt
European Patent Office
Office européen des brevets

(11) **EP 3 830 414 B1**

(12) **EUROPEAN PATENT SPECIFICATION**

(45) Date of publication and mention of the grant of the patent:
**12.07.2023 Bulletin 2023/28**

(21) Application number: **19744622.2**

(22) Date of filing: **16.07.2019**

(51) International Patent Classification (IPC):
**F03D 7/02** (2006.01)

(52) Cooperative Patent Classification (CPC):
**F03D 7/0236; F03D 7/0276; F03D 7/0296;**
F05B 2240/2022; F05B 2240/2213; F05B 2270/333;
Y02E 10/72

(86) International application number:
**PCT/DK2019/050229**

(87) International publication number:
**WO 2020/025093 (06.02.2020 Gazette 2020/06)**

(54) **NOISE REDUCTION IN A WIND TURBINE WITH HINGED BLADES**

GERÄUSCHMINDERUNG IN EINER WINDTURBINE MIT SCHWENKBAREN SCHAUFELN

RÉDUCTION DU BRUIT DANS UNE ÉOLIENNE À PALES ARTICULÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2018 DK PA201870512**

(43) Date of publication of application:
**09.06.2021 Bulletin 2021/23**

(73) Proprietor: **VESTAS WIND SYSTEMS A/S**
**8200 Aarhus N (DK)**

(72) Inventors:
• **NIELSEN, Thomas S. Bjertrup**
**8940 Randers SV (DK)**
• **ANDERSEN, Peter Bjørn**
**8660 Skanderborg (DK)**

(74) Representative: **Vestas Patents Department**
**Hedeager 42**
**8200 Aarhus N (DK)**

(56) References cited:
CN-A- 108 331 712    US-A- 2 360 792
US-A1- 2003 044 274    US-A1- 2012 257 974

**Description**

FIELD OF THE INVENTION

The present invention relates to a method for controlling a wind turbine with one or more blades connected pivotally to a blade carrying structure. The method according to the invention results in a reduced noise level generated by the wind turbine.

BACKGROUND OF THE INVENTION

Wind turbines are normally controlled in order to provide a desired power output and in order to control loads on the wind turbine. For horizontal axis wind turbines, i.e. wind turbines with a rotor which rotates about a substantially horizontal rotational axis, this may be obtained by controlling a pitch angle of the wind turbine blades. In this case the angle of attack of the wind turbine blades relative to the incoming wind is adjusted by rotating the wind turbine blades about a longitudinal axis.

As an alternative, see for instance US 2 360 792 A, wind turbines may be provided with wind turbine blades which are connected to a blade carrying structure via hinges, thereby allowing a pivot angle defined between the wind turbine blades and the blade carrying structure to be varied. In such wind turbines the diameter of the rotor of the wind turbine, and thereby the area swept by the rotor, is varied when the pivot angle is varied.

Noise generated by wind turbines is a great concern, and it is therefore desirable to minimise this. The generated noise increases significantly as the tip speed of the wind turbine increases. Therefore, one way of reducing the generated noise is to decrease the tip speed. In traditional pitch controlled wind turbines there is a fixed correspondence between the tip speed and the rotational speed of the wind turbine, determined by the length of the wind turbine blades. Therefore a decrease in tip speed causes a corresponding decrease in rotational speed, and thereby in reduced power production.

US 4,632,637 discloses a high speed, downwind horizontal axis wind turbine having three circumferentially spaced lightweight blades having inner support arms radially outwardly disposed blade segments which are pivotally connected to the support arms, so as to fold straight downwind under high wind conditions or high rotating speeds.

DESCRIPTION OF THE INVENTION

It is an object of embodiments of the invention to provide a method for controlling a wind turbine in a manner which reduces noise generated by the wind turbine without significantly reducing power production of the wind turbine.

According to a first aspect the invention provides a method according to claim 1 for controlling a wind turbine, the wind turbine comprising a tower, at least one nacelle mounted on the tower via a yaw system, a hub mounted rotatably on each nacelle, each hub comprising a blade carrying structure, and one or more wind turbine blades, each wind turbine blade being connected to the blade carrying structure via a hinge at a hinge position of the wind turbine blade, each wind turbine blade thereby being arranged to perform pivot movements relative to the blade carrying structure between a minimum pivot angle and a maximum pivot angle, the method comprising the steps of:

-   receiving a maximum noise level value representing a maximum allowable noise to be generated by the wind turbine,
-   deriving an optimal pair of tip speed for the wind turbine and rotational speed of the wind turbine, based on the received maximum noise level value, and
-   adjusting the pivot angle of the wind turbine blades to a pivot angle which results in the derived optimal pair of tip speed and rotational speed.

Thus, according to the first aspect, the invention provides a method for controlling a wind turbine comprising a tower with at least one nacelle mounted thereon, via a yaw system. The wind turbine may comprise only one nacelle, in which case the wind turbine is of a single rotor type. In this case the nacelle will typically be mounted on top of the tower. Alternatively, the wind turbine may comprise two or more nacelles, in which case the wind turbine is of a multirotor type. In this case at least some of the nacelles may be mounted directly on the tower and/or at least some of the nacelles may be mounted on the tower via load carrying structures, e.g. comprising arms extending in a direction away from the centre axis of the tower. Each nacelle may be mounted on the tower via a separate yaw system, or two or more nacelles may be mounted on the tower via a common yaw system, in which case these nacelles are yawed together relative to the tower.

In any event, since the nacelle(s) is/are mounted on the tower via a yaw system, they can rotate about a substantially vertical rotational axis, relative to the tower, in order to direct one or more rotors of the wind turbine in accordance with the incoming wind. The yaw system may be an active yaw system in which the nacelle is rotated actively by means of a yaw drive mechanism, e.g. on the basis of measurements of the wind direction. As an alternative, the yaw system may be a passive yaw system in which the nacelle automatically rotates according to the wind direction without the use of a yaw drive mechanism. As another alternative, the yaw system may be a combination of an active yaw system and a passive yaw system, in the sense that it may operate actively under some circumstances and passively under other circumstances.

The nacelle may be a traditional nacelle having an outer wall enclosing an interior of the nacelle, the nacelle housing various components of the wind turbine, such as generator, drive train, etc. As an alternative, the nacelle may simply be a structure which is capable of performing yawing movements relative to the tower. In this case some or all of the components described above may be arranged outside the nacelle, e.g. in an interior part of the tower.

A hub is mounted rotatably on each nacelle. The hub comprises a blade carrying structure having one or more wind turbine blades connected thereto. Accordingly, the wind turbine blades rotate along with the hub and the blade carrying structure relative to the nacelle.

The wind turbine is preferably a horizontal axis wind turbine.

Each of the wind turbine blades is connected to the blade carrying structure via a hinge at a hinge position of the wind turbine blade. Thereby each wind turbine blade is arranged to perform pivot movements relative to the blade carrying structure, via the hinge. A pivot angle is thereby defined between each wind turbine blade and the blade carrying structure, depending on the position of the hinge and thereby of the wind turbine blade relative to the blade carrying structure. Accordingly, the pivot angle defines the direction along which a given wind turbine blade extends relative the blade carrying structure, and thereby relative to the hub. This, in turn, determines a diameter of the rotor, and thereby the ability of the wind turbine to extract energy from the wind.

It is not ruled out that each wind turbine blade could be connected to the blade carrying structure via two or more hinges.

The hinge may be or comprise a bearing, e.g. in the form of a journal bearing, a roller bearing, or any other suitable kind of bearing.

The pivot angle can vary between a minimum pivot angle, defining a maximum rotor diameter, and a maximum pivot angle, defining a minimum rotor diameter.

According to the method of the first aspect of the invention, a maximum noise level value is initially received. The maximum noise level value represents the maximum allowable noise which the wind turbine is allowed to generate under the given circumstances. The maximum noise level value may be a fixed value which is established with due consideration to the location of the wind turbine, e.g. fulfilling local government requirements, taking distance to neighbours and topography of the site into account, etc. Alternatively, the maximum noise level value may be a dynamic value which can be varied according to currently prevailing ambient condition at the location of the wind turbine. Such ambient conditions could, e.g., include wind speed, wind direction, precipitation, time of day, etc.

For instance, at low wind speeds the background noise generated by the wind is relatively low. Therefore noise generated by wind turbines may be very audible, even across long distances, and therefore the maximum allowable noise level value may be very low under these circumstances. On the other hand, at higher wind speeds the background noise generated by the wind will normally be somewhat higher, and a higher maximum allowable noise level value may therefore be provided under these circumstances.

In the case that the wind direction is in a direction towards the nearest neighbours, a maximum allowable noise level value may be provided which is lower than a maximum allowable noise level value provided when the wind direction is in a direction away from the nearest neighbours.

When precipitation is occurring, such as rain or snow, the precipitation generates background noise, similar to the background noise generated by the wind. Thus, in the case that heavy precipitation is occurring, a maximum allowable noise level value may be provided which is higher than a maximum allowable noise level value provided when there is no precipitation.

Similar, in locations with variating background noise from, e.g., heavy traffic, construction or factories, a maximum allowable noise level may as well be provided which is higher than a maximum allowable noise level value provided during periods where there is less background noise.

Finally, noise restrictions may be stricter during nighttime than during daytime. Therefore the maximum allowable noise level value may be higher during daytime than during nighttime.

Next, an optimal pair of tip speed for the wind turbine and rotational speed of the wind turbine is derived, based on the received maximum noise level value.

In the present context the term 'tip speed' should be interpreted to mean the velocity of the tips of the wind turbine blades as they rotate along with the hub during operation of the wind turbine. In the present context the term 'rotational speed' should be interpreted to mean the angular velocity at which the hub rotates during operation.

In the present context the term 'a pair of tip speed and rotational speed' should be interpreted to mean one tip speed value and one rotational speed value, which are to be applied at the same time during operation of the wind turbine.

Aerodynamic noise from the wind turbine blades governed by the tip speed is typically the most dominant noise source in the overall noise generated by the wind turbine. Thus, the noise generated by a wind turbine depends on the tip speed according to the following equation:

$$SPL(dB(A)) \propto v_{tip}^{\alpha},$$

where SPL denotes the sound power level measured in decibel, $v_{tip}$ is the tip speed and $\alpha$ is a factor, which is larger than 1, and typically larger than 4, and which depends on the aerodynamic profile of the wind turbine blade. Thus, the overall noise generated by the wind turbine can be reduced by decreasing the tip speed, and increasing the tip speed results in an increase in the noise being generated by the wind turbine. Naturally, other noise sources, such as machine noise from the nacelle, generated by, e.g., the gear, the generator or by blowers or fans, contribute to the overall wind turbine noise level, and should be taken into account while reducing the noise below the received maximum noise level value.

For traditional pitch controlled wind turbines there is a fixed relationship between the tip speed for the wind turbine and the rotational speed of the wind turbine, due to the fixed rotor diameter. Therefore, in such wind turbines decreasing the tip speed inevitably results in a decrease in rotational speed, and thereby in a decrease in power production of the wind turbine.

However, for wind turbines with hinged wind turbine blades, the rotor diameter is variable, and therefore the tip speed can be varied without varying the rotational speed, and vice versa, due to the variable pivot angle of the wind turbine blades, and thereby variable rotor diameter. Accordingly, it is possible to select a pair of tip speed and rotational speed which fulfils various desirable criteria, such as low noise level, high power production, low mechanical loads on the wind turbine, etc.

Since the optimal pair of tip speed and rotational speed is derived based on the received maximum noise level value, it is ensured that the tip speed and rotational speed are selected in such a manner that the maximum noise level value is not exceeded. Furthermore, the derived pair of tip speed and rotational speed may be optimal in the sense that other criteria, such as maximum power production and/or minimum load, are fulfilled. This is possible because the hinged wind turbine blades allow the rotor diameter to be varied, and thereby the tip speed can, for instance, be decreased, thereby decreasing the noise generated by the wind turbine, without decreasing the rotational speed, and thereby the power production. This is a great advantage.

Finally, the pivot angle of the wind turbine blades is adjusted to a pivot angle which results in the derived optimal pair of tip speed and rotational speed. Thereby the wind turbine is operated with a tip speed which is equal to the tip speed of the derived pair, and with a rotational speed which is equal to the rotational speed of the derived pair. As a consequence, the noise generated by the wind turbine is maintained below the maximum noise level value, while other criteria, such as maximum power production and/or minimum load, are fulfilled.

As described above, this is possible because the hinged blades allow the diameter of the rotor to be varied, thereby decoupling the tip speed for the wind turbine and the rotational speed of the wind turbine. Accordingly, a low noise level can be obtained without decreasing the power production of the wind turbine.

The wind turbine blades may each define an inner tip end and an outer tip end forming an extremity of the wind turbine blade being arranged closest to the hub and an extremity of the wind turbine blade being arranged furthest away from the hub, respectively.

The hinge position may be arranged at a distance from the inner tip end and at a distance from the outer tip end. In this case, the wind turbine blade is hinged to the blade carrying structure at a position which is not at an end of the wind turbine blade. The wind turbine blades may then have a centre of mass for the wind turbine blade at rest which is positioned between the hinge position and the inner tip end of the wind turbine blade. In this case, the centre of mass for the wind turbine blade is arranged in a part of the wind turbine blade which is arranged closer to the hub than the hinge position. When the hub rotates relative to the nacelle, a centrifugal force acts on each of the wind turbine blades, at the position of the centre of mass. Thereby the centrifugal force will tend to push the part of the wind turbine blade arranged between the hinge position and the inner tip end, i.e. the part of the wind turbine blade where the centre of mass is arranged, in an outwards direction. This will cause the wind turbine blades to pivot via the hinges in such a manner that the wind turbine blades are rotated towards a position where the longitudinal direction of the wind turbine blades is arranged substantially parallel to the rotational axis of the hub. Thereby the wind turbine blades are pivoted in such a manner that the pivot angle is increased and the diameter of the rotor is reduced. The higher the rotational speed, the further the wind turbine blades will be pivoted towards this position.

Thus, according to this embodiment, the diameter of the rotor is automatically reduced as the rotational speed of the hub increases. Accordingly, the rotor diameter, and thereby the ability of the wind turbine to extract energy from the wind, is automatically adjusted according to the prevailing wind speed, without requiring complicated control algorithms or maintenance requiring mechanical parts, such as pitch mechanisms, etc.

Alternatively or additionally, aerodynamic forces acting on the aerodynamic profiles of the wind turbine blades may cause the wind turbine blades to pivot in such a manner that the diameter of the rotor is reduced as the wind speed increases. In a preferred embodiment, the centrifugal force and the aerodynamic forces cooperate in reducing the rotor diameter as the wind speed increases, i.e. they are not counteracting each other. This could, e.g., be obtained when the centre of mass of the wind turbine blades is arranged between the inner tip end of the wind turbine blades and the hinge position, as described above. For some wind turbines, e.g. small wind turbines, the centrifugal force may be the dominating factor with respect to ensuring that the wind turbine blades are pivoted towards smaller rotor diameter. For other wind turbines, e.g. larger wind turbines, the aerodynamic forces may be the dominating factor.

In other embodiments, the centre of mass of the wind turbine blades may be arranged at the hinge position or between hinge position and the outer tip end of the wind turbine blade. This results in either neutral centrifugal forces or centrifugal forces acting towards moving the wind turbine blade towards a position defining a minimum pivot angle as the rotational speed increases.

As an alternative, the hinge position may be arranged at the inner tip end. In this case, an active mechanism may be required in order to pivot the wind turbine blades. However, aerodynamic forces acting on the wind turbine blades may assist in pivoting the wind turbine blades.

The step of deriving an optimal pair of tip speed for the wind turbine and rotational speed of the wind turbine may comprise the steps of:

-    deriving a tip speed reference for the wind turbine, based on the maximum noise level, and
-    deriving an optimal pair of rotor diameter and rotational speed of the wind turbine which results in a tip speed of the wind turbine which is equal to the derived tip speed reference,

and the step of adjusting the pivot angle of the wind turbine blades may comprise adjusting the pivot angle of the wind turbine blades to a pivot angle which results in the derived rotor diameter.

According to this embodiment, the optimal pair of tip speed and rotational speed is derived in the following manner. A tip speed reference is derived, based on the maximum noise level. As described above, the noise generated by the wind turbine depends strongly on the tip speed for the wind turbine. Therefore, when the type of the wind turbine in question is known, including the aerodynamic properties of the wind turbine blades, it is possible to derive a tip speed which will result in a generated noise which is below the maximum noise level, but preferably close thereto.

Next, an optimal pair of rotor diameter and rotational speed of the wind turbine which results in a tip speed of the wind turbine which is equal to the derived tip speed reference is derived. As described above, for a given rotor diameter, the tip speed is given by the rotational speed of the wind turbine. However, since the rotor diameter of the wind turbine being controlled in accordance with the invention is variable, a given tip speed can be obtained by an infinite number of combinations of rotor diameter and rotational speed of the wind turbine. Among these combinations, one is selected which is optimal with respect to one or more appropriate criteria, such as maximum power production, minimum load, minimum wear, etc. The optimal pair of rotor diameter and rotational speed may be variable depending on wind speed. In this case the pivot angle may be changed dynamically, while still assuring tip speeds below the maximum tip speed value, as a function of wind speed. It should further be noted that a new optimal pair of rotor diameter and rotational speed of the wind turbine may be selected from time to time, e.g. depending on various operating conditions.

Finally, the pivot angle of the wind turbine blades is adjusted to a pivot angle which results in the derived rotor diameter. Thus, if the wind turbine is further operated in such a manner that the rotational speed of the wind turbine is equal to the rotational speed of the optimal pair of rotor diameter and rotational speed, then a tip speed of the wind turbine is obtained which is equal to the previously derived tip speed reference. Accordingly, it is ensured that the noise generated by the wind turbine is kept below the maximum noise level.

The step of deriving an optimal pair of rotor diameter and rotational speed of the wind turbine may comprise deriving a rotor diameter which results in a tip speed of the wind turbine which is equal to the derived tip speed reference, given that the current rotational speed of the wind turbine is maintained. According to this embodiment, the rotational speed of the wind turbine at the time where the maximum noise level value is received is maintained, and thereby the power production of the wind turbine is also maintained. Instead, the limited noise generation of the wind turbine is obtained solely by adjusting the rotor diameter of the wind turbine until a tip speed is obtained which ensures that the noise generated by the wind turbine is below the maximum noise level value. Accordingly, the noise generated by the wind turbine can be reduced without reducing the power production of the wind turbine, or with less reduction of power production.

The step of deriving an optimal pair of tip speed and rotational speed of the wind turbine may comprise maximizing a power production of the wind turbine. This could, e.g., be obtained in the manner described above, i.e. by maintaining the rotational speed of the wind turbine and adjusting the noise generated by the wind turbine purely by adjusting the rotor diameter of the wind turbine. The rotational speed of the wind turbine, and thereby the power production of the wind turbine, may even be increased, as long as a tip speed resulting in the generated noise being below the maximum noise level value is selected.

The method further comprises the step of applying a biasing force to the wind turbine blades which biases the wind turbine blades towards a position defining a minimum pivot angle, and the step of adjusting the pivot angle of the wind turbine blades may comprise adjusting the biasing force applied to the wind turbine blades.

According to this embodiment, the wind turbine blades are biased towards a position defining a minimum pivot angle, and thereby a maximum rotor diameter. The wind turbine blades are allowed to pivot as described above, but pivoting movements towards a position defining a maximum pivot angle are performed against the applied biasing force. In the case that the wind turbine blades are of a kind in which the pivot angle is automatically adjusted in response to the rotational speed of the wind turbine, the applied biasing force defines the equilibrium position, and thereby the pivot angle, for a given rotational speed.

When an adjustment of the pivot angle is required in order to adjust the noise generated by the wind turbine, the biasing force applied to the wind turbine blades is adjusted. In the case that a smaller rotor diameter is required for a given rotational speed, then the biasing force applied to the wind turbine blades is reduced. Thereby the wind turbine blades are biased towards the minimum pivot angle with a smaller force, and it becomes easier to move the wind turbine blades towards the maximum pivot angle. Accordingly, the equilibrium position for a given rotational speed changes in such a manner that a smaller rotor diameter is obtained at a given rotational speed.

Similarly, in the case that a larger rotor diameter is required for a given rotational speed, then the biasing force applied to the wind turbine blades is increased. Thereby the wind turbine blades are biased towards the minimum pivot angle with a larger force, and it becomes more difficult to move the wind turbine blades towards the maximum pivot angle. Accordingly, the equilibrium position for a given rotational speed changes in such a manner that a larger rotor diameter is obtained at a given rotational speed.

The biasing force could, e.g., be applied by means of wires attached to an inner part of the wind turbine blades, which pull the wind turbine blades outwards, i.e. towards the minimum pivot angle and maximum rotor diameter. In this case the biasing force can be adjusted by adjusting the pulling force applied by the wires. As an alternative, the biasing force could be applied by means of one or more springs acting on the wind turbine blades, e.g. compressible springs arranged for pulling or pushing the wind turbine blades towards the minimum pivot angle and maximum rotor diameter. In this case the biasing force can, e.g., be adjusted by means of pulleys or hydraulic actuators mounted in the hub, in the blade carrying structure, in the wind turbine blade itself, in the nacelle or in the tower.

As another alternative, the biasing force could be in the form of a moment. In this case the biasing force could be applied by means of a torsional spring arranged in the hinge which pulls or pushes the wind turbine blades towards the minimum pivot angle and maximum rotor diameter. In this case the biasing force can be adjusted by varying the torsional moment, e.g. by means of pulleys or hydraulic actuators mounted in the hub, in the blade carrying structure, in the wind turbine blade itself, in the nacelle or in the tower.

As another alternative, the biasing force could be applied by means of hydraulic mechanisms connected to the wind turbine blades and being arranged for pulling or pushing the wind turbine blades towards the minimum pivot angle and maximum rotor diameter. In this case the biasing force can be adjusted by adjusting the pressure in the hydraulic mechanisms.

As an alternative not part of the claimed invention, the step of adjusting the pivot angle of the wind turbine blades may comprise adjusting a force applied to the wind turbine blades which causes the wind turbine blades to move towards a position which increases the pivot angle.

According to this alternative, instead of biasing the wind turbine blades towards a position defining a minimum pivot angle, a force can be applied to the wind turbine blades which moves them in the opposite direction, i.e. towards a position defining a maximum pivot angle, and thereby a minimum rotor diameter. The mechanism which provides the pivot movements of the wind turbine blades may, in this case, advantageously be an active mechanism, which moves the wind turbine blades to a specific pivot angle, e.g. in response to a suitable control signal.

When an adjustment of the pivot angle is required in order to adjust the noise generated by the wind turbine, the applied force is adjusted. In the case that a smaller rotor diameter is required for a given rotational speed, then the applied force is increased, and in the case that a larger rotor diameter is required for a given rotational speed, then the applied force is decreased.

The force could, e.g., be applied by means of wires attached to the outer part of the wind turbine blades, which pull the wind turbine blades inwards, i.e. towards the maximum pivot angle and minimum rotor diameter. In this case the force can be adjusted by adjusting the pulling force applied by the wires.

As an alternative, the force could be applied by means of one or more springs acting on the wind turbine blades, e.g. compressible springs arranged for pulling or pushing the wind turbine blades towards the maximum pivot angle and minimum rotor diameter. In this case the force can, e.g., be adjusted by means of pulleys or hydraulic actuators mounted in the hub, in the blade carrying structure, in the wind turbine blade itself, in the nacelle or in the tower.

As another alternative, the force could be in the form of a moment. In this case the biasing force could be applied by means of a torsional spring arranged in the hinge which pulls or pushes the wind turbine blades towards the maximum pivot angle and minimum rotor diameter. In this case the force can be adjusted by varying the torsional moment, e.g. by means of pulleys or hydraulic actuators mounted in the hub, in the blade carrying structure, in the wind turbine blade itself, in the nacelle or in the tower.

As another alternative, the force could be applied by means of hydraulic mechanisms connected to the wind turbine blades and being arranged for pulling or pushing the wind turbine blades towards the maximum pivot angle and minimum rotor diameter. In this case the force can be adjusted by adjusting the pressure in the hydraulic mechanisms.

The method may further comprise the step of adjusting a generator torque of the wind turbine in order to reach the derived optimal pair of tip speed and rotational speed. Adjusting the generator torque results in a change in the rotational speed of the wind turbine. Thereby the tip speed for a given rotor diameter is also changed. Accordingly, by adjusting the generator torque, e.g. by adjusting the current in the generator via a frequency converter, a change in tip speed, and thereby in noise generated by the wind turbine, can be obtained without changing the rotor diameter, and thereby the area swept by the rotor.

The maximum noise level value may be received from a central controller. The central controller could, e.g., be a wind farm controller of a wind farm in which the wind turbine is located. Alternatively, the central controller could be arranged at a central monitoring centre which monitors and controls the noise level of a plurality of wind turbines.

As an alternative, the maximum noise level value may be generated by the controller of the wind turbine, e.g. based on the time of day, the time of year, wind speed, wind direction, etc.

The method according to the first aspect of the invention may further be used for reducing erosion of the wind turbine blades, in particular leading edge erosion. Such erosion may, e.g., be caused by heavy precipitation, e.g. in the form of rain, hail, snow, etc., sand/dirt storms, insect swarms or similar. Sand/dirt storms and insect swarms may further lead to fouling of the wind turbine blades, which in term may lead to undesired changes in the aerodynamic properties of the wind turbine blades.

Based on a detection of heavy rain, hail, snow, sand/dirt storms, insect swarms or similar, the tip speed of the wind turbine can be reduced in a manner similar to what is described above. However, in these cases the tip speed would normally be reduced more than when the method is applied with the purpose of reducing noise. Thereby the development of leading edge erosion over time is reduced. Furthermore, in the case of sand/dirt storms or insect swarms, fouling of the wind turbine blades may be reduced.

In situations with service and blade inspections where it is found that a certain level of leading edge erosion is found on the wind turbine blades, the tip speed reference can, e.g., be reduced to a lower tip speed level for a period until the leading edges of the wind turbine blades has been repaired in a planned blade service.

The method may further be used for protecting the wind turbine in the case of adverse weather conditions. In this case, if a weather forecast predicting adverse weather conditions, such as high wind speeds, gusty wind conditions, heavy precipitation, etc., is received, the wind turbine may be operated with a reduced tip speed in order to prevent damage to or excessive loads on the wind turbine, due to the adverse weather conditions.

According to a second aspect, the invention provides a method according to claim 7 for controlling a wind turbine, the wind turbine comprising a tower, at least one nacelle mounted on the tower via a yaw system, a hub mounted rotatably on each nacelle, each hub comprising a blade carrying structure, and one or more wind turbine blades, each wind turbine blade being connected to the blade carrying structure via a hinge at a hinge position of the wind turbine blade, each wind turbine blade thereby being arranged to perform pivot movements relative to the blade carrying structure between a minimum pivot angle and a maximum pivot angle, the method comprising the steps of:

- receiving a maximum tip speed value representing a maximum allowable tip speed of the wind turbine, based on a level of leading edge erosion and/or risk of development of leading edge erosion,
- deriving an optimal pair of rotor diameter and rotational speed of the wind turbine which results in a tip speed of the wind turbine which is equal to or smaller than the maximum tip speed value, and
- adjusting the pivot angle of the wind turbine blades to a pivot angle which results in the derived rotor diameter.

The method according to the second aspect of the invention is very similar to the method according to the first aspect of the invention. The remarks set forth above with reference to the first aspect of the invention are therefore equally applicable here.

However, whereas the method according to the first aspect of the invention aims at reducing the noise generated by the wind turbine, the method according to the second aspect of the invention aims at reducing the risk of erosion of the wind turbine blades, in particular leading edge erosion. The risk of development of leading edge erosion increases with increasing tip speed. Therefore, in the case that leading edge erosion is detected and/or if circumstances occur which increases the risk of development of leading edge erosion, the tip speed of the wind turbine may be limited to a level which reduces the risk of development of (further) leading edge erosions. Such circumstances could, e.g., be heavy precipitation, e.g. in the form of snow, rain, hail, etc., the presence of birds or insect swarms, dirt or sand storms, etc.

Thus, according to the method of the second aspect of the invention, a maximum tip speed value is initially received. The maximum tip speed value represents a maximum allowable tip speed of the wind turbine, based on a level of leading edge erosion and/or risk of development of leading edge erosion, as described above.

Next, an optimal pair of rotor diameter and rotational speed of the wind turbine is derived. The optimal pair of rotor diameter and rotational speed results in a tip speed of the wind turbine which is equal to or smaller than the maximum tip speed value. This may be done in the manner described above with reference to the first aspect of the invention.

Finally, the pivot angle of the wind turbine blades is adjusted to a pivot angle which results in the derived rotor diameter. Thereby it is ensured that the wind turbine is operated at a tip speed which is equal to or smaller than the maximum tip speed value. Accordingly, the wind turbine is operated in a manner which reduces the risk of erosion on the wind turbine blades.

The method according to the second aspect of the invention could, e.g., be applied in the case that leading edge erosion on the wind turbine blades is detected. It may then be necessary to operate the wind turbine in a protected mode, which ensures some power production without causing further erosion, until a maintenance session can be planned. Alternatively or additionally, the method may be applied in the case that circumstances which increase the risk of leading edge erosion on the wind turbine blades are occurring. In this case it may be necessary to operate the wind turbine in a protected mode until the circumstances have changed, in order to avoid undue erosion.

According to a third aspect the invention provides a wind turbine according to claim 8 comprising a tower, at least one nacelle mounted on the tower via a yaw system, a hub mounted rotatably on each nacelle, each hub comprising a blade carrying structure, and one or more wind turbine blades, each wind turbine blade being connected to the blade carrying structure via a hinge at a hinge position of the wind turbine blade, each wind turbine blade thereby being arranged to perform pivot movements relative to the blade carrying structure between a minimum pivot angle and a maximum pivot angle,

wherein the wind turbine further comprises a mechanism arranged to adjust the pivot angle of the wind turbine blades in response to a maximum noise level value representing a maximum allowable noise to be generated by the wind turbine.

The wind turbine according to the third aspect of the invention may be controlled by means of the method according to the first aspect of the invention and/or by means of a method according to the second aspect of the invention. The skilled person would therefore readily understand that any feature described in combination with the first or second aspect of the invention could also be combined with the third aspect of the invention, and vice versa. Accordingly, the remarks set forth above with reference to the first and second aspects of the invention are equally applicable here.

The wind turbine further comprises a biasing mechanism arranged to apply a biasing force to the wind turbine blades which biases the wind turbine blades towards a position defining a minimum pivot angle, and the mechanism arranged to adjust the pivot angle of the wind turbine blades may be arranged to adjust the applied biasing force. This has already been described above with reference to the first aspect of the invention.

The wind turbine may be a downwind wind turbine. According to this embodiment, the rotor faces away from the incoming wind, i.e. the wind reaches the wind turbine blades after having passed the nacelle. Downwind wind turbines are very suitable for applying passive yaw systems, i.e. yaw systems which automatically direct the rotor of the wind turbine towards the incoming wind without the use of yaw drives and control systems. Furthermore, in downwind wind turbines a passive cooling system can be arranged upwind with respect to the rotor, thereby enabling improved cooling of various wind turbine components.

As an alternative, the wind turbine may be an upwind wind turbine, in which case the rotor faces the incoming wind.

The wind turbine could further be provided with additional features for reducing noise, such as trailing edge serrations, zig zag tape, and/or flaps at the wind turbine blades.

BRIEF DESCRIPTION OF THE DRAWINGS

The invention will now be described in further detail with reference to the accompanying drawings in which

Fig. 1 is a front view of a wind turbine according to an embodiment of the invention,

Figs. 2 and 3 are side views of the wind turbine of Fig. 1 with the wind turbine blades at two different pivot angles,

Figs. 4 and 5 show details of a mechanism for adjusting a pivot angle of wind turbine blades of a wind turbine according to an embodiment of the invention,

Fig. 6 illustrates a wind turbine according to an embodiment of the invention with the wind turbine blades in three different positions,

Figs. 7-9 illustrate various mechanisms for adjusting a pivot angle of wind turbine blades of wind turbines according to embodiments of the invention,

Fig. 10 is a graph illustrating tip speed as a function wind speed for a traditional wind turbine and for a wind turbine operated in accordance with a method according to an embodiment of the invention, respectively,

Fig. 11 is a graph illustrating power production as a function of wind speed for a traditional wind turbine and for a wind turbine operated in accordance with a method according to an embodiment of the invention, respectively,

Fig. 12 is a graph illustrating rotational speed as a function of wind speed for a traditional wind turbine and for a wind turbine operated in accordance with a method according to an embodiment of the invention, respectively,

Fig. 13 is a graph illustrating generated noise level as a function of rotor diameter for a traditional wind turbine and for a wind turbine operated in accordance with a method according to an embodiment of the invention, respectively, and

Figs. 14 and 15 are graphs illustrating tip speed as a function of wind speed for a traditional wind turbine and for a wind turbine operated in accordance with a method according to two alternative embodiments of the invention.

DETAILED DESCRIPTION OF THE DRAWINGS

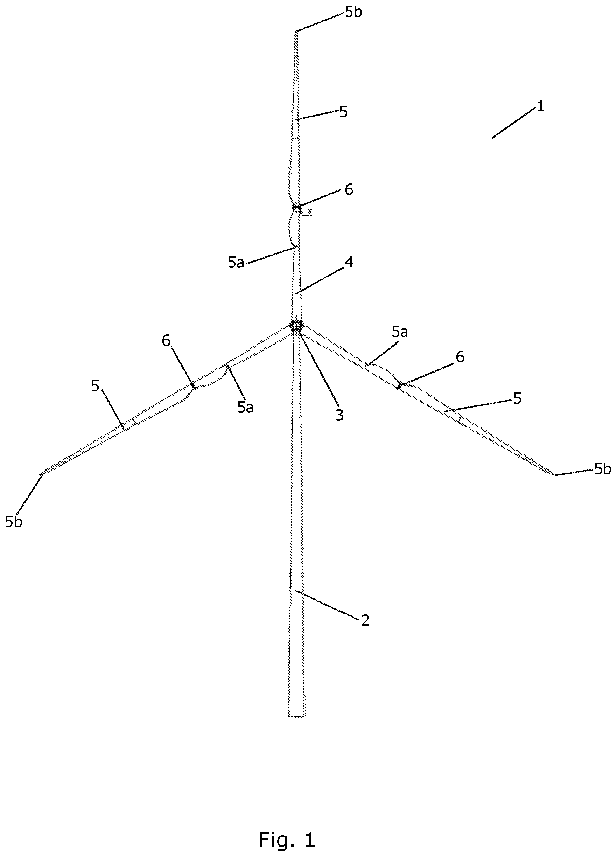

Fig. 1 is a front view of a wind turbine 1 according to an embodiment of the invention. The wind turbine 1 comprises a tower 2 and a nacelle (not visible) mounted on the tower 2. A hub 3 is mounted rotatably on the nacelle, the hub 3 comprising a blade carrying structure 4 with three arms. A wind turbine blade 5 is connected to each of the arms of the blade carrying structure 4 via a hinge 6. Thus, the wind turbine blades 5 rotate along with the hub 3, relative to the nacelle, and the wind turbine blades 5 can perform pivoting movements relative to the blade carrying structure 4, via the hinges 6.

Each wind turbine blade 5 defines an aerodynamic profile extending along the length of the wind turbine blade 5 between an inner tip end 5a and an outer tip end 5b. The hinge 6 is arranged at a hinge position of the wind turbine blade 5, the hinge position being at a distance from the inner tip end 5a as well as at a distance from the outer tip end 5b.

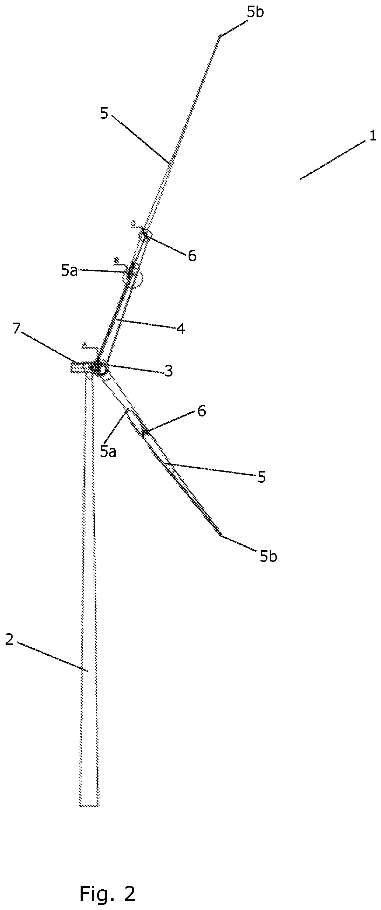

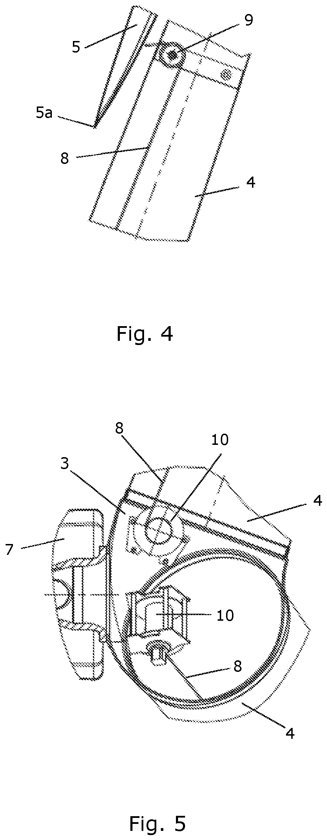

Fig. 2 is a side view of the wind turbine 1 of Fig. 1 with the wind turbine blades 5 positioned at a minimum pivot angle, i.e. at a pivot angle which results in a maximum rotor diameter of the wind turbine 1. In Fig. 2 the nacelle 7 can be seen. The wind turbine blades 5 are biased towards this position by means of a wire attached to the inner part of the wind turbine blades 5, i.e. at a position between the hinge 6 and the inner tip end 5a. This will be described in further detail below with reference to Figs. 4 and 5.

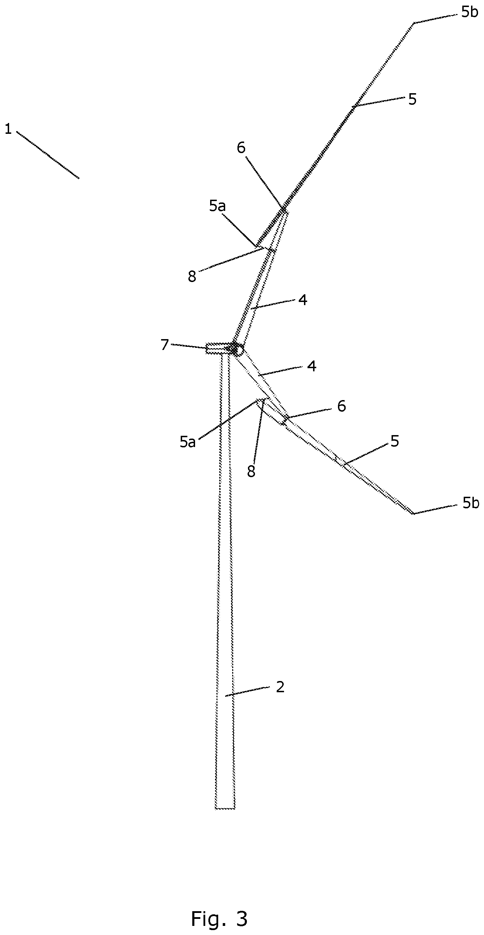

Fig. 3 is a side view of the wind turbine 1 of Figs. 1 and 2. In Fig. 3 the wind turbine blades 5 are positioned at a larger pivot angle than the minimum pivot angle of Fig. 2. Thereby the rotor diameter of the wind turbine 1 is smaller in the situation illustrated in Fig. 3 than in the situation illustrated in Fig. 2. Assuming that the rotational speed of the wind turbine 1 is the same in the two situations, the tip speed will be lower in the situation illustrated in Fig. 3 than in the situation illustrated in Fig. 2. Since the noise generated by the wind turbine 1 depends strongly on the tip speed, the noise generated by the wind turbine 1 is thereby lower in the situation illustrated in Fig. 3 than in the situation illustrated in Fig. 2. In Fig. 3 a portion of the wires 8 pulling the wind turbine blades 5 towards the minimum pivot angle position can be seen.

The wind turbine 1 of Figs. 1-3 may be operated in the following manner. Initially the wind turbine 1 is operated in an ordinary manner, extracting as much energy as possible from the wind, without considering the noise generated by the wind turbine 1. The wires 8 bias the wind turbine blades 5 towards the minimum pivot angle position, while centrifugal forces acting on the wind turbine blades 5 and possibly aerodynamic forces acting on the wind turbine blades 5 attempt to move the wind turbine blades 5 towards larger pivot angles in such a manner that the higher the rotational speed of the wind turbine 1, the larger the combined centrifugal and aerodynamic force will be. Thus, for a given wind speed, and thereby a given rotational speed of the wind turbine 1, an equilibrium is obtained which positions the wind turbine blades 5 at a certain pivot angle.

At a certain point in time, a maximum noise level value is received. The maximum noise level value represents a maximum allowable noise to be generated by the wind turbine 1. Accordingly, the maximum noise level value indicates an upper limit for the noise which the wind turbine 1 is allowed to generate under the given circumstances. The maximum noise level value may be a fixed value, representing a noise level which should not be exceeded at any time. Alternatively, the maximum noise level may be a dynamic value which varies according to prevailing conditions, such as time of day, time of year, wind speed, wind direction, etc.

Based on the received maximum noise level value, an optimal pair of tip speed for the wind turbine 1 and rotational speed of the wind turbine 1 is derived. Thus, operating the wind turbine 1 at the tip speed and rotational speed of the derived optimal pair results in a noise being generated by the wind turbine 1 which is below the maximum noise level value. Furthermore, the derived pair of tip speed and rotational speed is optimal in the sense that other considerations are taken into account, such as power production of the wind turbine 1, loads on the wind turbine 1, etc. The optimal pair of tip speed and rotational speed could, e.g., be derived by deriving a tip speed reference ensuring that the maximum noise level value is not exceeded, and deriving an optimal pair of rotor diameter and rotational speed of the wind turbine which results in a tip speed of the wind turbine 1 which is equal to the derived tip speed reference. The optimal pair of tip speed and rotational speed is then the tip speed reference and the rotational speed of the optimal pair of rotor diameter and rotational speed.

Then the pivot angle of the wind turbine blades 5 is adjusted to a pivot angle which results in the derived optimal pair of tip speed and rotational speed. Operating the wind turbine 1 with the wind turbine blades 5 arranged at this pivot angle will, accordingly, has the consequence that the maximum noise level value is not exceeded.

The pivot angle of the wind turbine blades 5 may be adjusted in the following manner. As described above, the wires 8 pull the wind turbine blades 5 towards a position defining a minimum pivot angle, and thereby a maximum rotor diameter of the wind turbine 1. In the case that it is necessary to reduce the tip speed in order to decrease the noise level, the pulling force applied to the wind turbine blades 5 by the wires 8 is reduced. This allows the wind turbine blades 5 to more easily move towards a larger pivot angle, and thereby towards a smaller rotor diameter. Therefore a new equilibrium position for the pivot angle at a given rotational speed is obtained, at a larger pivot angle. Accordingly, the wind turbine 1 will be operated with a smaller rotor diameter, and thereby with a lower tip speed. This reduces the noise generated by the wind turbine 1.

The wind turbine 1 illustrated in Fig. 2 is operated at maximum rotor diameter, e.g. with a maximum force applied to the wind turbine blades 5 by the wires 8. In the wind turbine 1 of Fig. 3, the force applied to the wind turbine blades 5 by the wires 8 has been decreased, resulting in an increased pivot angle, a decreased rotor diameter, a reduced tip speed and thereby a reduced noise level generated by the wind turbine 1.

Figs. 4 and 5 show details of a mechanism for adjusting a pivot angle of wind turbine blades 5 of a wind turbine according to an embodiment of the invention. The wind turbine could, e.g., be the wind turbine 1 of Figs. 1-3.

Fig. 4 shows a portion of a blade carrying structure 4 and a portion of a wind turbine blade 5. The wind turbine blade 5 is pivotally mounted on the blade carrying structure 4 via a hinge (not shown). A wire 8 is connected to the wind turbine blade 5 at a position between an inner tip end 5a of the wind turbine blade 5 and the position of the hinge. The wire 8 extends from the connecting position at the wind turbine blade 5, via a pulley 9 and along the blade carrying structure 4 towards a hub (not shown).

A pulling force applied by means of the wire 8 pulls the wind turbine blade 5 towards a position defining a minimum pivot angle. In Fig. 4 the wind turbine blade is arranged at the minimum pivot angle. Reducing the pulling force applied by means of the wire 8 will allow the wind turbine blade 5 to more easily pivot towards larger pivot angles, in the manner described above with reference to Figs. 1-3.

Fig. 5 is a cross sectional view of part of a hub 3 and part of a nacelle 7. Arms of a blade carrying structure 4 are mounted on the hub 3. The wires 8 which are also illustrated in Fig. 4 are connected to winch mechanisms 10 arranged in the hub 3. Thereby the pulling force applied by means of the wires 8 can be adjusted by rotating the winch mechanisms 10, thereby adjusting the length of the wires 8.

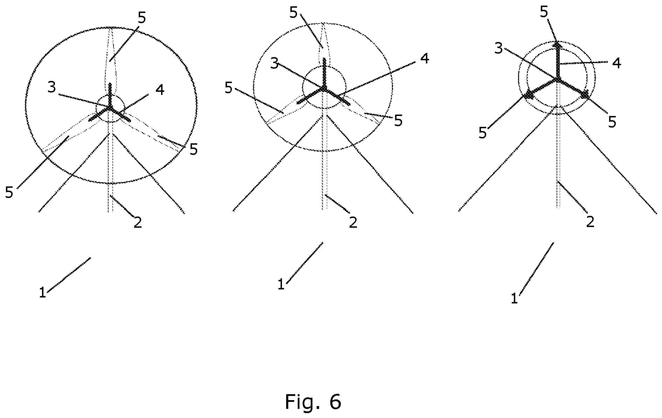

Fig. 6 illustrates a wind turbine 1 according to an embodiment of the invention with the wind turbine blades 5 arranged at three different pivot angles. The wind turbine 1 could, e.g., be the wind turbine of Figs. 1-3.

The left most drawing shows the wind turbine 1 with the wind turbine blades 5 positioned at a minimum pivot angle, and thereby with a maximum rotor diameter.

The middle drawing shows the wind turbine 1 with the wind turbine blades 5 positioned at a pivot angle which is larger than the pivot angle of the left most drawing. Accordingly, the rotor diameter of the wind turbine 1 of the middle drawing is smaller than the rotor diameter of the wind turbine 1 of the left most drawing. Thereby the tip speed of the wind turbine 1 of the middle drawing is lower than the tip speed of the wind turbine 1 of the left most drawing, leading to a lower noise generation of the wind turbine.

The right most drawing shows the wind turbine 1 with the wind turbine blades 5 positioned at an even larger pivot angle, resulting in a very small rotor diameter, an even lower tip speed and thereby an even lower noise generation of the wind turbine 1. It can be seen that the wind turbine blades 5 are arranged substantially parallel to a rotational axis of the hub 3. This position is sometimes referred to as 'barrel mode'.

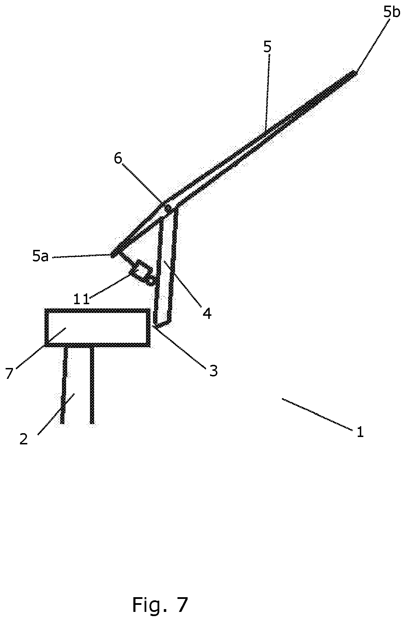

Fig. 7 is a schematic view illustrating a wind turbine 1 according to a second embodiment of the invention. The wind turbine 1 of Fig. 7 is very similar to the wind turbine 1 of Figs. 1-3, and it will therefore not be described in detail here.

The wind turbine 1 of Fig. 7 is not provided with the wires illustrated in Figs. 1-3. Instead the wind turbine blades 5 are biased towards a position defining a minimum pivot angle, and thereby a maximum rotor diameter, by means of a hydraulic mechanism 11 connected between the blade carrying structure 4 and the wind turbine blade 5, at a position between the inner tip end 5a of the wind turbine blade 5 and the hinge 6. The hydraulic mechanism 11 applies a biasing force to the wind turbine blades 5 which pulls the wind turbine blades 5 towards the position defining a minimum pivot angle. The applied biasing force can be adjusted by adjusting a pressure of the hydraulic mechanism 11.

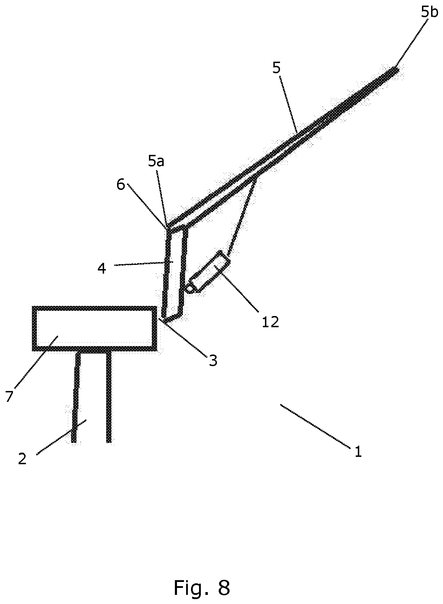

Fig. 8 is a schematic view illustrating a wind turbine 1 according to a third embodiment of the invention. The wind turbine 1 of Fig. 8 is very similar to the wind turbines 1 of Figs. 1-3 and 7, and it will therefore not be described in detail here.

In the wind turbine 1 of Fig. 8 the wind turbine blades 5 are connected to the blade carrying structure 4 via a hinge 6 at the inner tip end 5a of the wind turbine blade 5. Furthermore, the wind turbine 1 of Fig. 8 is not provided with biasing means biasing the wind turbine blades 5 towards a position defining a minimum pivot angle, and thereby a maximum rotor diameter. Instead a hydraulic mechanism 12 is connected between the blade carrying structure 4 and the wind turbine blade 5, and the wind turbine blades 5 can be pulled towards a position defining maximum pivot angle, and thereby minimum rotor diameter by means of the hydraulic mechanism 12. Accordingly, the hydraulic mechanism 12 applies a force to the wind turbine blades 5 which causes them to move in this direction.

In the case that an adjustment of the pivot angle of the wind turbine blades 5 is required, this can be obtained by adjusting the force applied to the wind turbine blades 5. In the wind turbine 1 of Fig. 8 this can be obtained by adjusting the pressure of the hydraulic mechanism 12.

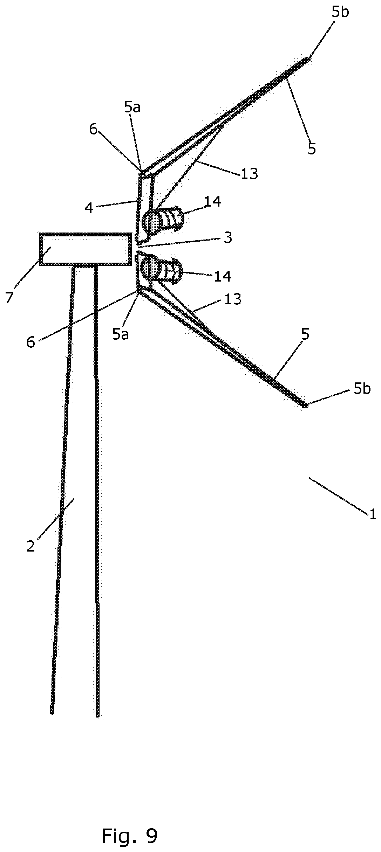

Fig. 9 is a schematic view illustrating a wind turbine 1 according to a fourth embodiment of the invention. The wind turbine 1 of Fig. 9 is very similar to the wind turbines of Figs. 1-3, 7and 8, and it will therefore not be described in detail here.

Similarly to the wind turbine 1 of Fig. 8, the wind turbine blades 5 of the wind turbine 1 of Fig. 9 are connected to the blade carrying structure 4 via a hinge 6 at the inner tip end 5a of the wind turbine blades 5. However, in the wind turbine 1 of Fig. 9 the force applied to the wind turbine blades 5 causing them to move towards a position defining maximum pivot angle, and thereby minimum rotor diameter, is provided by means of wires 13 connected to winches 14 mounted on the blade carrying structure 4. In the case that an adjustment of the pivot angle of the wind turbine blades 5 is required, this can be obtained by operating the winches 14, thereby adjusting the length of the wires 13 and accordingly the applied pulling force.

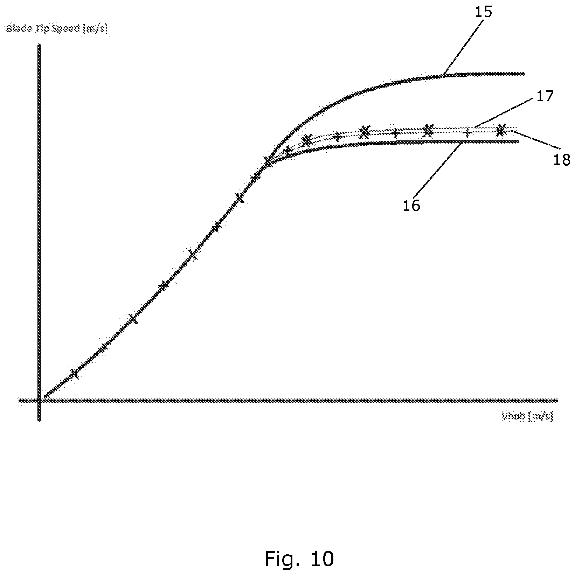

Fig. 10 is a graph illustrating tip speed as a function of wind speed at the level of the hub of a wind turbine. The unmarked lines 15, 16 represent a wind turbine being controlled in accordance with a prior art method, while the lines marked with 'X' 17 and 'X +' 18 represent a wind turbine being controlled in accordance with a method according to a first embodiment of the invention.

Line 15 represents the prior art control method during operation without noise constraints, line 16 represents the prior art control method during operation with noise constraints, line 17 represents the control method according to the first embodiment of the invention during operation without noise constraints, and line 18 represents the control method according to the first embodiment of the invention during operation with noise constraints.

It can be seen that for low wind speeds, the tip speed in the four cases described above is identical. Accordingly, at low wind speeds the wind turbine is operated to obtain the same tip speed, regardless of whether the prior art control method or the method according to the invention is applied, and regardless of whether or not noise constraints are applying.

For high wind speeds, the wind turbine being controlled in accordance with the prior art method is operated with a significantly lower tip speed when noise constraints are applying, illustrated by line 16, than when there are no noise constraints, illustrated by line 15. As previously described, this is because the noise generated by the wind turbine depends strongly on the tip speed.

However, the wind turbine being controlled in accordance with a method according to the first embodiment of the invention is operated at almost identical tip speeds when there are no noise constraints, illustrated by line 17, and when noise constraints are applying, illustrated by line 18. It should be noted that in the case the method was applied in order to reduce erosion, the tip speed would be reduced to a greater extent, i.e. line 18 would be arranged at a lower tip speed and the difference between lines 17 and 18 would be larger.

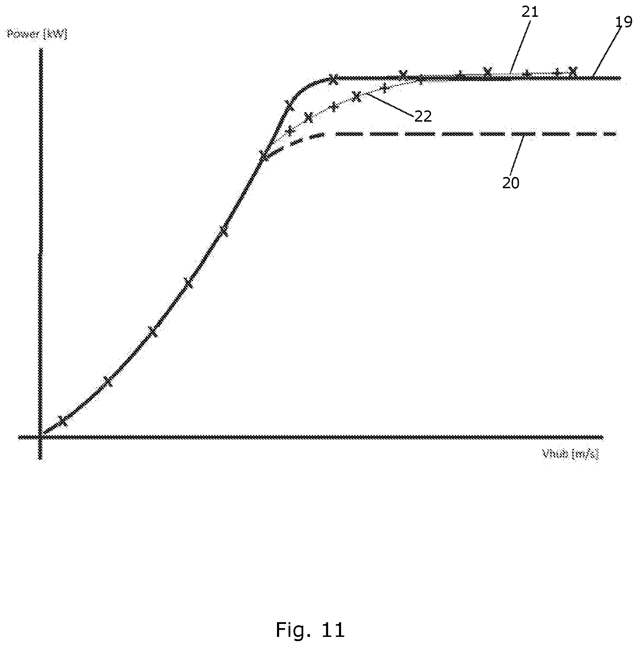

Fig. 11 is a graph illustrating power production as a function of wind speed. The solid line 19 and the dashed line 20 represent a wind turbine being controlled in accordance with a prior art method, while the lines marked with 'X' 21 and 'X +' 22 represent a wind turbine being controlled in accordance with a method according to an embodiment of the invention.

Line 19 represents the prior art control method during operation without noise constraints, line 20 represents the prior art control method during operation with noise constraints, line 21 represents the control method according to the invention during operation without noise constraints, and line 22 represents the control method according to the invention during operation with noise constraints.

It can be seen that for low wind speeds, the power production in the four cases described above is identical. Accordingly, at low wind speeds the power production of the wind turbine is the same, regardless of whether the prior art control method or the method according to the invention is applied, and regardless of whether or not noise constraints are applying.

For high wind speeds, the power production of the wind turbine being controlled in accordance with the prior art control method is significantly reduced when noise constraints are applying, illustrated by line 20, as compared to when there are no noise constraints, illustrated by line 19. Thus, in this case a noise reduction is obtained, but the consequence is a reduction in the power produced by the wind turbine. This is because the noise reduction is obtained by reducing the tip speed, and the tip speed can only be reduced by also reducing the rotational speed of the wind turbine, and thereby the power production.

However, as can be seen from lines 21 and 22, the power production of the wind turbine being controlled in accordance with the method according to the invention is maintained almost at the level of the prior art control method without noise constraints, illustrated by line 19, regardless of whether or not noise constraints are applying. The power production is only reduced slightly in a small region around the nominal wind speed. This is because the tip speed can be reduced, thereby reducing the noise generated by the wind turbine, without reducing the rotational speed, and thereby the power production of the wind turbine, because the rotor diameter is adjustable.

Thus, operating the wind turbine in accordance with a method according to the invention, it is possible to reduce the noise generated by the wind turbine, essentially without reducing the power production of the wind turbine.

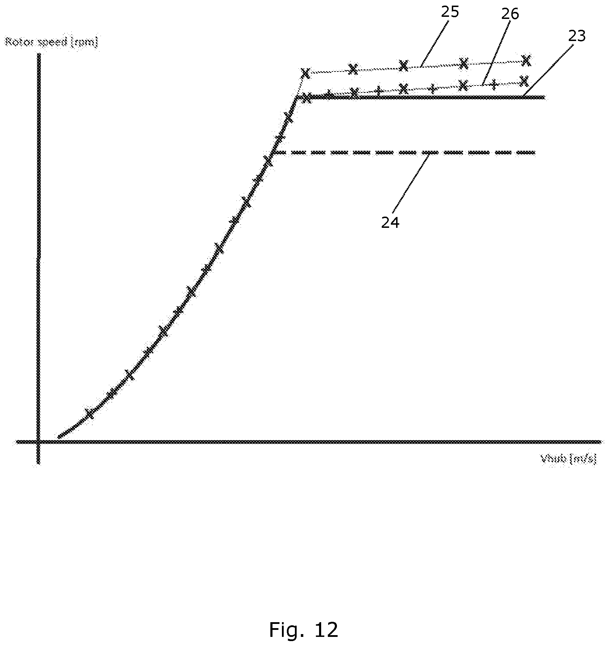

Fig. 12 is a graph illustrating rotational speed as a function of wind speed. The solid line 23 and the dashed line 24 represent a wind turbine being controlled in accordance with a prior art method, while the lines marked with 'X' 25 and 'X +' 26 represent a wind turbine being controlled in accordance with a method according to an embodiment of the invention.

Line 23 represents the prior art control method during operation without noise constraints, line 24 represents the prior art control method during operation with noise constraints, line 25 represents the control method according to the invention during operation without noise constraints, and line 26 represents the control method according to the invention during operation with noise constraints.

It can be seen that for low wind speeds, the rotational speed in the four cases described above is identical. Accordingly, at low wind speeds the rotational speed of the wind turbine is the same, regardless of whether the prior art control method or the method according to the invention is applied, and regardless of whether or not noise constraints are applying.

At high wind speeds, rotor speed of the wind turbine being controlled in accordance with the prior art method is significantly reduced when noise constraints are applying, illustrated by line 24, as compared to when there are no noise constraints, illustrated by line 23.

For the wind turbine being controlled in accordance with a method according to the invention, the rotational speed is also reduced when noise constraints are applying, illustrated by line 26, as compared to when there are no noise constraints, illustrated by line 25. However, the reduction in rotational speed is smaller than the reduction for the wind turbine being controlled in accordance with the prior art method. Furthermore, the rotational speed of the wind turbine being controlled in accordance with a method according to the invention is higher than the rotational speed of the wind turbine being controlled according to the prior art method with no noise constraints, also when noise constraints are applying.

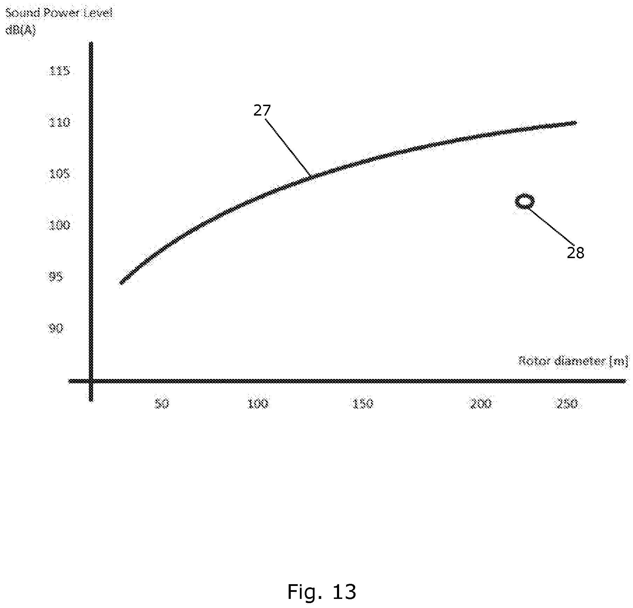

Fig. 13 is a graph illustrating generated noise levels as a function of rotor diameters for a number of wind turbines with different rotor diameters being controlled according to a prior art method, illustrated by line 27, and for a wind turbine being controlled in accordance with a method according to the invention, illustrated by point 28, where the maximum rotor diameter corresponding to the minimum pivot angle is used. It can be seen that for a given maximum rotor diameter the noise level generated by a wind turbine being operated in accordance with a method according to the invention is lower as compared to the prior art, which is a significant benefit.

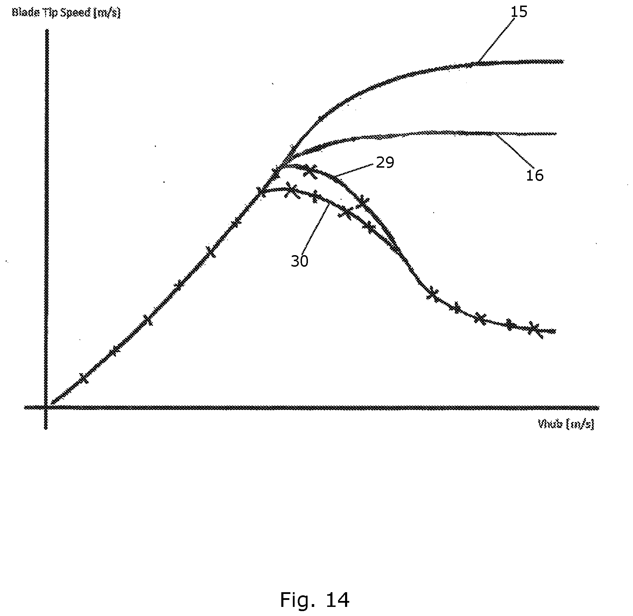

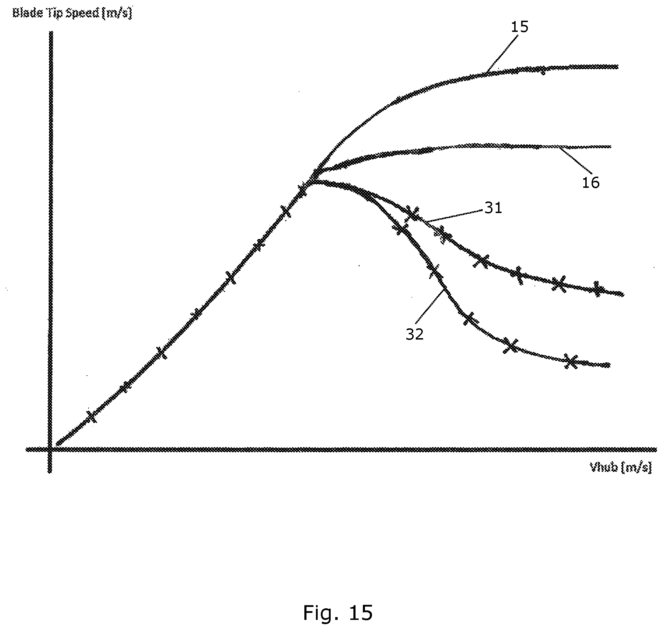

Figs. 14 and 15 are graphs illustrating tip speed as a function of wind speed at the level of the hub of a wind turbine, similar to Fig. 10. However, Figs. 14 and 15 illustrate two alternative embodiments of the invention.

In Fig. 14 the unmarked lines 15, 16 represent a wind turbine being controlled in accordance with a prior art method, as described above with reference to Fig. 10. The lines marked with 'X' 29 and 'X +' 30 represent a wind turbine being controlled in accordance with a method according to a second embodiment of the invention. Line 29 represents the control method according to the second embodiment of the invention during operation without noise constraints, and line 30 represents the control method according to the second embodiment of the invention during operation with noise constraints.

It can be seen that for low wind speeds, the tip speed when no noise constraints apply, represented by line 29, and the tip speed when noise constraints apply, represented by line 30, are identical. It can further be seen that the tip speed, in both cases 29, 30, increases as a function of increasing wind speed until a certain wind speed, where a maximum tip speed occurs. The maximum tip speed is lower when noise constraints apply, represented by line 30, than when no noise constraints apply, represented by line 29. At higher wind speeds, the tip speed is reduced. In particular, the tip speed at higher wind speeds is significantly lower than the tip speeds in the prior art scenario, represented by lines 15 and 16.

Thus, in the embodiment illustrated in Fig. 14, the tip speed, and thereby the noise level, of the wind turbine is significantly lower than the tip speed, and thereby the noise level, of the prior art wind turbine, represented by lines 15 and 16. Furthermore, the amount of time where the wind turbine is operated at the maximum tip speed is minimised. This results in reduced leading edge erosion of the wind turbine blades.

In Fig. 15 the unmarked lines 15, 16 also represent a wind turbine being controlled in accordance with a prior art method, as described above with reference to Fig. 10. The lines marked with 'X' 31 and 'X +' 32 represent a wind turbine being controlled in accordance with a method according to a third embodiment of the invention. Line 31 represents the control method according to the third embodiment of the invention during operation without noise constraints, and line 32 represents the control method according to the third embodiment of the invention during operation with noise constraints.

Similarly to the second embodiment illustrated in Fig. 14, the tip speed when no noise constraints apply, represented by line 31, and the tip speed when noise constraints apply, represented by line 32, are identical at low wind speeds, and the tip speed, in both cases 31, 32, increases as a function of increasing wind speed until a certain wind speed, where a maximum tip speed occurs.

At higher wind speeds, the tip speed is reduced in such a manner that the tip speed is reduced more when noise constraints apply, represented by line 32, than when no noise constraints apply, represented by line 31.

**Claims**

1. A method for controlling a wind turbine (1), the wind turbine (1) comprising a tower (2), at least one nacelle (7) mounted on the tower (2) via a yaw system, a hub (3) mounted rotatably on each nacelle (7), each hub (3) comprising a blade carrying structure (4), and one or more wind turbine blades (5), each wind turbine blade (5) being connected to the blade carrying structure (4) via a hinge (6) at a hinge position of the wind turbine blade (5), each wind turbine blade (5) thereby being arranged to perform pivot movements relative to the blade carrying structure (4) between a minimum pivot angle and a maximum pivot angle, the method being **characterized by** the steps of:

- receiving a maximum noise level value representing a maximum allowable noise to be generated by the wind turbine (1),
- deriving an optimal pair of tip speed for the wind turbine (1) and rotational speed of the wind turbine (1), based on the received maximum noise level value, and
- adjusting the pivot angle of the wind turbine blades (5) to a pivot angle which results in the derived optimal pair of tip speed and rotational speed,

wherein the method further comprises the step of applying an adjustable biasing force to the wind turbine blades (5) which biases the wind turbine blades (5) towards a position defining a minimum pivot angle, and wherein the step of adjusting the pivot angle of the wind turbine blades (5) comprises adjusting the biasing force applied to the wind turbine blades (5).

2. A method according to claim 1, wherein the step of deriving an optimal pair of tip speed for the wind turbine (1) and rotational speed of the wind turbine (1) comprises the steps of:

- deriving a tip speed reference for the wind turbine (1), based on the maximum noise level, and
- deriving an optimal pair of rotor diameter and rotational speed of the wind turbine (1) which results in a tip speed of the wind turbine (1) which is equal to the derived tip speed reference,

and wherein the step of adjusting the pivot angle of the wind turbine blades (5) comprises adjusting the pivot angle of the wind turbine blades (5) to a pivot angle which results in the derived rotor diameter.

3. A method according to claim 2, wherein the step of deriving an optimal pair of rotor diameter and rotational speed of the wind turbine (1) comprises deriving a rotor diameter which results in a tip speed of the wind turbine (1) which is equal to the derived tip speed reference, given that the current rotational speed of the wind turbine (1) is maintained.

4. A method according to any of the preceding claims, wherein the step of deriving an optimal pair of tip speed and rotational speed of the wind turbine (1) comprises maximizing a power production of the wind turbine (1).

5. A method according to any of the preceding claims, further comprising the step of adjusting a generator torque of the wind turbine (1) in order to reach the derived optimal pair of tip speed and rotational speed.

6. A method according to any of the preceding claims, wherein the maximum noise level value is received from a central controller.

7. A method for controlling a wind turbine, the wind turbine (1) comprising a tower (2), at least one nacelle (7) mounted on the tower (2) via a yaw system, a hub (3) mounted rotatably on each nacelle (7), each hub (3) comprising a blade carrying structure (4), and one or more wind turbine blades (5), each wind turbine blade (5) being connected to the blade carrying structure (4) via a hinge (6) at a hinge position of the wind turbine blade (5), each wind turbine blade (5) thereby being arranged to perform pivot movements relative to the blade carrying structure (4) between a minimum pivot angle and a maximum pivot angle, the method being **characterized by** the steps of:

- receiving a maximum tip speed value representing a maximum allowable tip speed of the wind turbine (1), based on a level of leading edge erosion and/or risk of development of leading edge erosion,
- deriving an optimal pair of rotor diameter and rotational speed of the wind turbine (1) which results in a tip speed of the wind turbine (1) which is equal to or smaller than the maximum tip speed value, and
- adjusting the pivot angle of the wind turbine blades (5) to a pivot angle which results in the derived rotor diameter,

wherein the method further comprises the step of applying an adjustable biasing force to the wind turbine blades (5) which biases the wind turbine blades (5) towards a position defining a minimum pivot angle, and wherein the step of adjusting the pivot angle of the wind turbine blades (5) comprises adjusting the biasing force applied to the wind turbine blades (5).

8. A wind turbine (1) comprising a tower (2), at least one nacelle (7) mounted on the tower (2) via a yaw system, a hub (3) mounted rotatably on each nacelle (7), each hub (3) comprising a blade carrying structure (4), and one or more wind turbine blades (5), each wind turbine blade (5) being connected to the blade carrying structure (4) via a hinge (6) at a hinge position of the wind turbine blade (5), each wind turbine blade (5) thereby being arranged to perform pivot movements relative to the blade carrying structure (4) between a minimum pivot angle and a maximum pivot angle,

wherein the wind turbine (1) is **characterized by** a mechanism (8, 10, 11, 12, 13, 14) arranged to adjust the pivot angle of the wind turbine blades (5) in response to a maximum noise level value representing a maximum allowable noise to be generated by the wind turbine (1), wherein the wind turbine (1) further comprises a biasing mechanism (8, 10, 11) arranged to apply an adjustable biasing force to the wind turbine blades (5) which biases the wind turbine blades (5) towards a position defining a minimum pivot angle, and wherein the mechanism (8, 10, 11) arranged to adjust the pivot angle of the wind turbine blades (5) is arranged to adjust the applied biasing force.

9. A wind turbine (1) according to claim 8, wherein the wind turbine (1) is a downwind wind turbine.

**Patentansprüche**

1. Verfahren zum Steuern einer Windkraftanlage (1), wobei die Windkraftanlage (1) einen Turm (2), mindestens eine Gondel (7), die über ein Giersystem an dem Turm (2) montiert ist, eine Nabe (3), die rotierbar an jeder Gondel (7) montiert ist, umfasst, wobei jede Nabe (3) eine Blatttragestruktur (4) und ein oder mehrere Windkraftanlagenblätter (5) umfasst, jedes Windkraftanlagenblatt (5) an einer Scharnierposition des Windkraftanlagenblatts (5) über ein Scharnier (6) mit der Blatttragestruktur (4) verbunden ist, jedes Windkraftanlagenblatt (5) dadurch angeordnet ist, um Schwenkbewegungen in Bezug auf die Blatttragestruktur (4) zwischen einem Mindestschwenkwinkel und einem Höchstschwenkwinkel durchzuführen, wobei das Verfahren **gekennzeichnet ist durch** die Schritte des:

- Empfangens eines maximalen Lärmpegelwerts, der einen maximal zulässigen Lärm darstellt, der von der Windkraftanlage (1) erzeugt wird,
- Herleitens eines optimalen Paars von Geschwindigkeit der Spitzen für die Windkraftanlage (1) und Rotationsgeschwindigkeit der Windkraftanlage (1) basierend auf dem empfangenen maximalen Lärmpegelwert, und
- Anpassens des Schwenkwinkels der Windkraftanlagenblätter (5) an einen Schwenkwinkel, aus dem das hergeleitete optimale Paar von Geschwindigkeit der Spitzen und Rotationsgeschwindigkeit resultiert,
wobei das Verfahren weiter den Schritt des Anwendens einer regulierbaren Vorspannkraft auf die Windkraftanlagenblätter (5) umfasst, die die Windkraftanlagenblätter (5) zu einer Position hin vorspannt, die einen Mindestschwenkwinkel definiert, und wobei der Schritt des Anpassens des Schwenkwinkels der Windkraftanlagenblätter (5) Anpassen der auf die Windkraftanlagenblätter (5) angewandten Vorspannkraft umfasst.

2. Verfahren nach Anspruch 1, wobei der Schritt des Herleitens eines optimalem Paars von Geschwindigkeit der Spitzen für die Windkraftanlage (1) und Rotationsgeschwindigkeit der Windkraftanlage (1) den Schritt umfasst des:

- Herleitens einer Geschwindigkeitsreferenz der Spitzen für die Windkraftanlage (1) basierend auf dem maximalen Lärmpegel, und
- Herleitens eines optimalen Paars von Rotordurchmesser und Rotationsgeschwindigkeit der Windkraftanlage (1), aus dem eine Geschwindigkeit der Spitzen der Windkraftanlage (1) resultiert, die gleich der hergeleiteten Geschwindigkeitsreferenz der Spitzen ist, und wobei der Schritt des Anpassens des Schwenkwinkels der Windkraftanlagenblätter (5) Anpassen des Schwenkwinkels der Windkraftanlagenblätter (5) an einen Schwenkwinkel umfasst, aus dem der hergeleitete Rotordurchmesser resultiert.

3. Verfahren nach Anspruch 2, wobei der Schritt des Herleitens eines optimalen Paars von Rotordurchmesser und Rotationsgeschwindigkeit der Windkraftanlage (1) Herleiten eines Rotordurchmessers umfasst, aus dem eine Geschwindigkeit der Spitzen der Windkraftanlage (1) resultiert, die gleich der hergeleiteten Geschwindigkeitsreferenz der Spitzen ist, unter der Annahme, dass die gegenwärtige Rotationsgeschwindigkeit der Windkraftanlage (1) beibehalten wird.

4. Verfahren nach einem der vorstehenden Ansprüche, wobei der Schritt des Herleitens eines optimalen Paars von Geschwindigkeit der Spitzen und Rotationsgeschwindigkeit der Windkraftanlage (1) Maximieren einer Leistungserzeugung der Windkraftanlage (1) umfasst.

5. Verfahren nach einem der vorstehenden Ansprüche, weiter umfassend den Schritt des Anpassens eines Generatordrehmoments der Windkraftanlage (1), um das hergeleitete optimale Paar von Geschwindigkeit der Spitzen und Rotationsgeschwindigkeit zu erreichen.

**6.** Verfahren nach einem der vorstehenden Ansprüche, wobei der maximale Lärmpegelwert von einer zentralen Steuereinheit empfangen wird.

**7.** Verfahren zum Steuern einer Windkraftanlage, wobei die Windkraftanlage (1) einen Turm (2), mindestens eine Gondel (7), die über ein Giersystem an dem Turm (2) montiert ist, eine Nabe (3), die rotierbar an jeder Gondel (7) montiert ist, umfasst, wobei jede Nabe (3) eine Blatttragestruktur (4) und ein oder mehrere Windkraftanlagenblätter (5) umfasst, jedes Windkraftanlagenblatt (5) an einer Scharnierposition des Windkraftanlagenblatts (5) über ein Scharnier (6) mit der Blatttragestruktur (4) verbunden ist, jedes Windkraftanlagenblatt (5) dadurch angeordnet ist, um Schwenkbewegungen in Bezug auf die Blatttragestruktur (4) zwischen einem Mindestschwenkwinkel und einem Höchstschwenkwinkel durchzuführen, wobei das Verfahren **gekennzeichnet ist durch** die Schritte des:

- Empfangens eines maximalen Geschwindigkeitswerts der Spitzen, der eine maximal zulässige Geschwindigkeit der Spitzen der Windkraftanlage (1) darstellt, basierend auf einem Grad von Blattvorderkantenerosion und/oder Gefahr der Entwicklung von Blattvorderkantenerosion,
- Herleitens eines optimalen Paars von Rotordurchmesser und Rotationsgeschwindigkeit der Windkraftanlage (1), aus der eine Geschwindigkeit der Spitzen der Windkraftanlage (1) resultiert, die gleich oder kleiner ist als der maximale Geschwindigkeitswert der Spitzen, und
- Anpassens des Schwenkwinkels der Windkraftanlagenblätter (5) an einen Schwenkwinkel, aus dem der hergeleitete Rotordurchmesser resultiert,
wobei das Verfahren weiter den Schritt des Anwendens einer regulierbaren Vorspannkraft auf die Windkraftanlagenblätter (5) umfasst, die die Windkraftanlagenblätter (5) zu einer Position hin vorspannt, die einen Mindestschwenkwinkel definiert, und wobei der Schritt des Anpassens des Schwenkwinkels der Windkraftanlagenblätter (5) Anpassen der auf die Windkraftanlagenblätter (5) angewandten Vorspannkraft umfasst.

**8.** Windkraftanlage (1), umfassend einen Turm (2), mindestens eine Gondel (7), die über ein Giersystem an dem Turm (2) montiert ist, eine Nabe (3), die rotierbar an jeder Gondel (7) montiert ist, wobei jede Nabe (3) eine Blatttragestruktur (4) und ein oder mehrere Windkraftanlagenblätter (5) umfasst, jedes Windkraftanlagenblatt (5) an einer Scharnierposition des Windkraftanlagenblatts (5) über ein Scharnier (6) mit der Blatttragestruktur (4) verbunden ist, jedes Windkraftanlagenblatt (5) dadurch angeordnet ist, um Schwenkbewegungen in Bezug auf die Blatttragestruktur (4) zwischen einem Mindestschwenkwinkel und einem Höchstschwenkwinkel durchzuführen,

wobei die Windkraftanlage (1) **gekennzeichnet ist durch** einen Mechanismus (8, 10, 11, 12, 13, 14), der angeordnet ist, um den Schwenkwinkel der Windkraftanlagenblätter (5) als Antwort auf einen maximalen Lärmpegelwert, der einen maximal zulässigen Lärm darstellt, der von der Windkraftanlage (1) erzeugt wird, anzupassen, wobei die Windkraftanlage (1) weiter einen Vorspannmechanismus (8, 10, 11) umfasst, der angeordnet ist, um eine regulierbare Vorspannkraft auf die Windkraftanlagenblätter (5) anzuwenden, die die Windkraftanlagenblätter (5) zu einer Position hin vorspannt, die einen Mindestschwenkwinkel definiert, und wobei der Mechanismus (8, 10, 11), der angeordnet ist, um den Schwenkwinkel der Windkraftanlagenblätter (5) anzupassen, angeordnet ist, um die angewandte Vorspannkraft anzupassen.

**9.** Windkraftanlage (1) nach Anspruch 8, wobei die Windkraftanlage (1) eine leeseitige Windkraftanlage ist.

## Revendications

**1.** Procédé de commande d'une éolienne (1), l'éolienne (1) comprenant une tour (2), au moins une nacelle (7) montée sur la tour (2) via un système de lacet, un moyeu (3) monté de manière rotative sur chaque nacelle (7), chaque moyeu (3) comprenant une structure porteuse de pale (4), et une ou plusieurs pales d'éolienne (5), chaque pale d'éolienne (5) étant reliée à la structure porteuse de pale (4) via une articulation (6) dans une position d'articulation de la pale d'éolienne (5), chaque pale d'éolienne (5) étant ainsi agencée pour réaliser des mouvements de pivotement par rapport à la structure porteuse de pale (4) entre un angle de pivotement minimum et un angle de pivotement maximum, le procédé étant **caractérisé par** les étapes de :

- réception d'une valeur de niveau de bruit maximum représentant un bruit admissible au maximum à générer par l'éolienne (1),
- dérivation d'une paire optimale de vitesse de pointe pour l'éolienne (1) et de vitesse de rotation de l'éolienne (1), sur la base de la valeur de niveau de bruit maximum reçue, et
- ajustement de l'angle de pivotement des pales d'éolienne (5) à un angle de pivotement qui résulte en la paire optimale dérivée de vitesse de pointe et vitesse de rotation,

dans lequel le procédé comprend en outre l'étape d'application d'une force d'inclinaison ajustable aux pales d'éolienne (5) qui incline les pales d'éolienne (5) vers une position définissant un angle de pivotement minimum, et dans lequel l'étape d'ajustement de l'angle de pivotement des pales d'éolienne (5) comprend l'ajustement de la force d'inclinaison appliquée aux pales d'éolienne (5).

2. Procédé selon la revendication 1, dans lequel l'étape de dérivation d'une paire optimale de vitesse de pointe pour l'éolienne (1) et de vitesse de rotation de l'éolienne (1) comprend les étapes de :

- dérivation d'une référence de vitesse de pointe pour l'éolienne (1), sur la base du niveau de bruit maximum, et
- dérivation d'une paire optimale de diamètre de rotor et de vitesse de rotation de l'éolienne (1) qui résulte en une vitesse de pointe de l'éolienne (1) qui est égale à la référence de vitesse de pointe dérivée,
et dans lequel l'étape d'ajustement de l'angle de pivotement des pales d'éolienne (5) comprend l'ajustement de l'angle de pivotement des pales d'éolienne (5) à un angle de pivotement qui résulte en le diamètre de rotor dérivé.

3. Procédé selon la revendication 2, dans lequel l'étape de dérivation d'un paire optimale de diamètre de rotor et de vitesse de rotation de l'éolienne (1) comprend la dérivation d'un diamètre de rotor qui résulte en une vitesse de pointe de l'éolienne (1) qui est égale à la référence de vitesse de pointe dérivée, étant donné que la vitesse de rotation actuelle de l'éolienne (1) est maintenue.

4. Procédé selon l'une quelconque des revendications précédentes, dans lequel l'étape de dérivation d'une paire optimale de vitesse de pointe et de vitesse de rotation de l'éolienne (1) comprend la maximisation d'une production d'énergie de l'éolienne (1).

5. Procédé selon l'une quelconque des revendications précédentes, comprenant en outre l'étape d'ajustement d'un couple de générateur de l'éolienne (1) afin d'atteindre la paire optimale dérivée de vitesse de pointe et de vitesse de rotation.

6. Procédé selon l'une quelconque des revendications précédentes, dans lequel la valeur de niveau de bruit maximum est reçue par un dispositif de commande central.

7. Procédé de commande d'une éolienne, l'éolienne (1) comprenant une tour (2), au moins une nacelle (7) montée sur la tour (2) via un système de lacet, un moyeu (3) monté de manière rotative sur chaque nacelle (7), chaque moyeu (3) comprenant une structure porteuse de pale (4), et une ou plusieurs pales d'éolienne (5), chaque pale d'éolienne (5) étant reliée à la structure porteuse de pale (4) via une articulation (6) dans une position d'articulation de la pale d'éolienne (5), chaque pale d'éolienne (5) étant ainsi agencée pour réaliser des mouvements de pivotement par rapport à la structure porteuse de pale (4) entre un angle de pivotement minimum et un angle de pivotement maximum, le procédé étant **caractérisé par** les étapes de :

- réception d'une valeur de vitesse de pointe maximum représentant une vitesse de pointe admissible au maximum de l'éolienne (1), sur la base d'un niveau d'érosion de bord d'attaque et/ou d'un risque de développement d'érosion de bord d'attaque,
- dérivation d'une paire optimale de diamètre de rotor et de vitesse de rotation de l'éolienne (1) qui résulte en une vitesse de pointe de l'éolienne (1) qui est égale ou inférieure à la valeur de vitesse de pointe maximum, et
- ajustement de l'angle de pivotement des pales d'éolienne (5) à un angle de pivotement qui résulte en le diamètre de rotor dérivé,
dans lequel le procédé comprend en outre l'étape d'application d'une force d'inclinaison ajustable aux pales d'éolienne (5) qui incline les pales d'éolienne (5) vers une position définissant un angle de pivotement minimum, et dans lequel l'étape d'ajustement de l'angle de pivotement des pales d'éolienne (5) comprend l'ajustement de la force d'inclinaison appliquée aux pales d'éolienne (5).

8. Éolienne (1) comprenant une tour (2), au moins une nacelle (7) montée sur la tour (2) via un système de lacet, un moyeu (3) monté de manière rotative sur chaque nacelle (7), chaque moyeu (3) comprenant une structure porteuse de pale (4), et une ou plusieurs pales d'éolienne (5), chaque pale d'éolienne (5) étant reliée à la structure porteuse de pale (4) via une articulation (6) dans une position d'articulation de la pale d'éolienne (5), chaque pale d'éolienne (5) étant ainsi agencée pour réaliser des mouvements de pivotement par rapport à la structure porteuse de pale (4) entre un angle de pivotement minimum et un angle de pivotement maximum,

dans laquelle l'éolienne (1) est **caractérisée par** un mécanisme (8, 10, 11, 12, 13, 14) agencé pour ajuster l'angle de pivotement des pales d'éolienne (5) en réponse à une valeur de niveau de bruit maximum représentant un bruit admissible au maximum à générer par l'éolienne (1), dans laquelle l'éolienne (1) comprend en outre un mécanisme d'inclinaison (8, 10, 11) agencé pour appliquer une force d'inclinaison ajustable aux pales d'éolienne (5) qui incline les pales d'éolienne (5) vers une position définissant un angle de pivotement minimum, et dans laquelle le mécanisme (8, 10, 11) agencé pour ajuster l'angle de pivotement des pales d'éolienne (5) est agencé pour ajuster la force d'inclinaison appliquée.

9. Eolienne (1) selon la revendication 8, dans laquelle l'éolienne (1) est une éolienne sous le vent.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**EP 3 830 414 B1**

REFERENCES CITED IN THE DESCRIPTION

**Patent documents cited in the description**

- US 2360792 A
- US 4632637 A